# EUROPÄISCHE PATENTSCHRIFT

(11) **EP 2 933 078 B1**
(45) Veröffentlichungstag und Bekanntmachung des Hinweises auf die Patenterteilung: **12.06.2019**
(21) Anmeldenummer: 14164612.5
(22) Anmeldetag: 14.04.2014
(51) Int. Cl.: B28C 5/12, B01F 3/12, C04B 40/00

(54) **Verfahren zum Anmachen schwer benetzbarer Trockenbaustoffe zur Herstellung einer Putz- oder Mörtelmasse**
Method for mixing dry building materials which are difficult to wet for producing a plaster or mortar composition
Procédé de gâchage de matériaux de construction secs difficilement mouillables pour la fabrication d'une masse d'enduit ou de mortier

(43) Veröffentlichungstag der Anmeldung: 21.10.2015
(73) Patentinhaber: STO SE & Co. KGaA, 79780 Stühlingen (DE)
(72) Erfinder: Färber, Rainer, 79879 Ewattingen (DE); Restle, Christian, 78250 Tengen-Talheim (DE)
(74) Vertreter: Gottschalk, Matthias

(56) Entgegenhaltungen:
- EP-A1- 2 586 581
- EP-A2- 0 051 224
- EP-A2- 1 000 718
- EP-A2- 1 914 056
- WO-A1-94/20274
- DE-A1- 3 104 751
- DE-A1- 3 241 193

## Beschreibung

Die Erfindung betrifft ein Verfahren zum Anmachen schwer benetzbarer Trockenbaustoffe zur Herstellung einer Putz- oder Mörtelmasse mit den Merkmalen des Oberbegriffs des Anspruchs 1.

### Stand der Technik

Bei der Herstellung von Putz- oder Mörtelmassen werden in der Regel Trockenbaustoffe eingesetzt, die in Säcken oder Silos auf der Baustelle vorgehalten und erst kurz vor deren Verarbeitung durch Zugabe einer Anmachflüssigkeit, insbesondere Wasser, angemacht werden. Hierbei finden in der Regel Vorrichtungen Einsatz, die auch als Putzmaschinen oder Mörtelmischpumpen bezeichnet werden. Das Anmachen erfolgt demnach maschinell, was eine gleichmäßige Vermischung der Ausgangsstoffe sicherstellen soll.

Aus der DE 20 2006 016 925 U1 geht beispielhaft eine Mischvorrichtung für fließfähige Materialien hervor, die eine Zuführzone zum Zuführen wenigstens eines Ausgangsmaterials und eine sich hieran anschließende Mischzone zum Mischen des wenigstens einen Ausgangsmaterials mit einer Anmachflüssigkeit, insbesondere Wasser, besitzt. Die Mischzone umfasst ein äußeres und ein inneres Mischzonenrohr, mit einer hierin angeordneten, drehbaren Mischwelle, wobei das innere Mischzonenrohr zum Reinigen herausnehmbar im äußeren Mischzonenrohr gehalten ist.

Eine Vorrichtung zum Anmachen eines trockenen oder rieselfähigen Baustoffs, der beim Anmachen zur Klümpchenbildung neigt, ist in der DE 20 2008 016 904 U1 offenbart. Die Vorrichtung umfasst einen Behälter zur Aufnahme des Baustoffs und wenigstens ein in einer Mischkammer angeordnetes Mischwerkzeug. Um einer Klümpchenbildung entgegen zu wirken, wird der Baustoff vor Eintritt in die Mischkammer aufgelockert oder fluidisiert. Die Auflockerung bzw. Fluidisierung des Baustoffs soll die Vermischung des Baustoffs mit einer Anmachflüssigkeit erleichtern, die dem Baustoff in der Mischkammer zugeführt wird. Nach dem Durchlaufen der Mischkammer und dem Vermischen mit der Anmachflüssigkeit wird der Baustoff über eine Schneckenpumpe einer Fortsetzung der Mischkammer zugeführt und dort einem Nachmischprozess unterzogen. Durch den Nachmischprozess sollen etwaige noch verbliebene Klümpchen oder unerwünschte Zusammenballungen des Baustoffs gänzlich zum Verschwinden gebracht werden.

Ein Verfahren und eine Vorrichtung zum kontinuierlichen Anmachen von Mörtel, Putz oder dergleichen geht ferner aus der EP 0 051 224 A2 hervor. Bei dem Verfahren wird die Mischung einer längeren Verweilzeit ausgesetzt und zugleich gerührt, um einen größeren Luftporenanteil einzubringen. Die längere Verweilzeit wird durch Stauen des Materials bewirkt.

Eine Stauung des Materials wird ferner bei dem Mischer zum Herstellen pumpfähiger Putzmassen der EP 1 000 718 A2 bewirkt, der hierzu ein Mischrohr mit mindestens einem Stauring umfasst.

Aus der EP 1 914 056 A2 ist ein Verfahren zum maschinellen Anmachen schwer benetzbarer Trockenbaustoffe zur Herstellung einer Putz-oder Mörtelmasse gemäss dem Oberbegriff des Anspruchs 1 bekannt und offenbart ferner eine Einrichtung zum kontinuierlichen und intensiven Mischen von Trockenmörteln, die eine Mischerwelle mit Leiteinrichtungen und speziellen Mischwerkzeugen umfasst, um eine intensive Durchmischung zu erreichen.

Die EP 2 586 581 A1 offenbart eine Vorrichtung zur Herstellung eines zementösen Agglomerats, die mehrere Mischwellen umfasst, so dass die zu mischenden Ausgangsstoffe mehrere Mischzonen durchlaufen, bevor sie einer Austragseinrichtung zugeführt werden.

Beim Anmachen schwer benetzbarer Trockenbaustoffe besteht regelmäßig die Gefahr, dass die Benetzung des Trockenbaustoffs mit der Anmachflüssigkeit unzureichend ist. Dies kann nicht nur zu unerwünschten Agglomerationen des Trockenbaustoffs und damit zur Klümpchenbildung führen, sondern ferner zu einem vorzeitigen Verschleiß eines nachgeschalteten Förderaggregats zum Austragen des angemachten Trockenbaustoffs. In der Regel finden hierbei Schneckenpumpen Einsatz, an welche eine Spritzvorrichtung anschließbar ist. Der vorzeitige Verschleiß ist auf eine erhöhte Reibung an den Förderaggregatoberflächen bzw. am Schneckenpumpenmantel aufgrund des hohen Anteils unbenetzter Partikel des Trockenbaustoffs zurückzuführen. Die erhöhte Reibung kann zudem schnell zu einer Überhitzung des Förderaggregats führen, insbesondere dann, wenn aufgrund der schlechten Benetzung mit Anmachflüssigkeit diese nicht als Kühlmedium zur Verfügung steht.

Als "schwer benetzbar" werden vorliegend insbesondere solche Trockenbaustoffe verstanden, die stark hydrophob sind. Hierunter fallen beispielsweise Aerogel-Partikel, die aufgrund ihrer hervorragenden Wärmedämmeigenschaften als Leichtfüllstoff in Dämmputzen Verwendung finden. Derartige Dämmputze werden beispielhaft in der WO 1994/20274 A1 offenbart. Die hervorragenden Wärmedämmeigenschaften der Aerogel-Partikel sind auf ihre hohe Porosität zurückzuführen. Diese bringt jedoch ferner mit sich, dass Aerogel-Partikel besonders empfindlich gegenüber Scherkräften sind und daher beim maschinellen Anmachen leicht zerfallen. Damit verlieren sie jedoch ihre hervorragenden Wärmedämmeigenschaften.

Der Erfindung liegt die Aufgabe zugrunde, ein Verfahren zum maschinellen Anmachen schwer benetzbarer bzw. hydrophober Trockenbaustoffe anzugeben, das nicht zu den vorstehend genannten Nachteilen führt. Insbesondere soll das Verfahren verschleißarm in Bezug auf die hierbei eingesetzte Vorrichtung und schonend für den anzumachenden Trockenbaustoff sein. Ferner soll eine nach dem Verfahren hergestellte Putzmasse zur Herstellung eines Dämmputzes mit hervorragenden Wärmedämmeigenschaften angegeben werden.

Zur Lösung der Aufgabe wird das Verfahren mit den Merkmalen des Anspruchs 1 vorgeschlagen. Vorteilhafte Weiterbildungen der Erfindung sind den jeweiligen Unteransprüchen zu entnehmen.

### Offenbarung der Erfindung

Bei dem vorgeschlagenen Verfahren zum maschinellen Anmachen schwer benetzbarer Trockenbaustoffe zur Herstellung einer Putz- oder Mörtelmasse wird wenigstens einem Trockenbaustoff eine Anmachflüssigkeit zugegeben. Anschließend werden der Trockenbaustoff und die Anmachflüssigkeit in einem ersten Mischvorgang gemischt. Dabei wird die den Trockenbaustoff und die Anmachflüssigkeit enthaltende Mischung wenigstens einem weiteren Mischvorgang unterzogen, der unmittelbar auf den ersten Mischvorgang folgt. Anschließend wird der angemachte Trockenbaustoff einem Förderaggregat, insbesondere einer Schneckenpumpe, zugeführt.

Der wenigstens eine weitere Mischvorgang intensiviert das Mischen, so dass die Benetzung des Trockenbaustoffs mit der Anmachflüssigkeit verbessert wird. Wird anschließend der angemachte Trockenbaustoff dem Förderaggregat zugeführt, ist ausreichend Anmachflüssigkeit enthalten, um die Reibung und damit den Verschleiß an den Förderaggregatoberflächen gering zu halten. Die enthaltene Anmachflüssigkeit wirkt zudem einem Überhitzen des Förderaggregats entgegen, da sie zugleich als Kühlmedium dient.

Um eine besonders schonende Verarbeitung des Trockenbaustoffs zu ermöglichen, werden erfindungsgemäß bei dem wenigstens einen weiteren Mischvorgang statische Mischwerkzeuge eingesetzt. Diese können dynamische Mischwerkzeuge ganz oder teilweise ersetzen. Statische Mischwerkzeuge teilen den Stoffstrom auf und führen ihn anschließend wieder zusammen, so dass allein durch die Strömungsbewegung eine gute Durchmischung der jeweiligen Ausgangsstoffe erreicht wird.

Die schonende Verarbeitung durch die vorgeschlagenen statischen Mischwerkzeuge ermöglicht den Einsatz besonders empfindlicher Trockenbaustoffe. Denn durch die statischen Mischwerkzeuge wird der anzumachende Trockenbaustoff verringerten Reib- und/oder Scherkräften ausgesetzt. Das vorgeschlagene Verfahren eignet sich demnach insbesondere zum Anmachen von Trockenbaustoffen, die wenig abriebfest und/oder besonders empfindlich gegenüber Scherkräften sind, wie dies beispielsweise bei Perlite der Fall ist.

Erfindungsgemäß wird daher ein Trockenbaustoff verwendet, der wenigstens Aerogel-Partikel als Leichtfüllstoff enthält.

In Weiterbildung der Erfindung wird vorgeschlagen, dass bei dem weiteren Mischvorgang mit den statischen Mischwerkzeugen zusammenwirkende dynamische Mischwerkzeuge eingesetzt werden. Dadurch kann das Mischen nochmals intensiviert werden. Die mit den statischen Mischwerkzeugen zusammenwirkenden dynamischen Mischwerkzeuge sind hierzu bevorzugt an einer Welle angeordnet und erstrecken sich von der Welle nach radial außen, während die statischen Mischwerkzeuge sich vorzugsweise von einer Innenumfangsfläche eines die Welle umgebenden Mischrohrs nach radial innen erstrecken. Die statischen und dynamischen Werkzeuge sind vorzugsweise versetzt zueinander angeordnet und berühren sich nicht, um weiterhin eine möglichst schonende Verarbeitung des Trockenbaustoffs zu gewährleisten. Vorzugsweise sind die statischen und/oder dynamischen Mischwerkzeuge als Stifte, Paddel und/oder Flügel ausgebildet, die in einer oder mehreren Reihen über den Innenumfang des Mischrohrs und/oder den Außenumfang der Welle gleichmäßig verteilt angeordnet sind.

Da sich der weitere Mischvorgang unmittelbar an den ersten Mischvorgang anschließt, kann die Welle weitere Mischwerkzeuge umfassen, die der Durchführung des ersten Mischvorgangs dienen. Auf diese Weise kann der Werkzeugeinsatz reduziert werden. Insbesondere können der erste und der weitere Mischvorgang in einer gemeinsamen Mischvorrichtung durchgeführt werden, wodurch das Verfahren vereinfacht wird.

Ferner wird vorgeschlagen, dass die Mischwerkzeuge aufweisende Welle und/oder eine Welle des Förderaggregats elektromotorisch angetrieben wird bzw. werden. Bevorzugt werden beide Wellen elektromotorisch angetrieben. Weiterhin bevorzugt sind die beiden Wellen wirkverbunden und werden über einen gemeinsamen Elektromotor angetrieben. Dadurch können Energiekosten gespart werden.

Vorteilhafterweise wird bei dem Verfahren ein Trockenbaustoff verwendet, der zusätzlich Perlite und/oder Vermiculite als Leichtfüllstoff enthält. Denn derartige Leichtfüllstoffe sind besonders schwer benetzbar und/oder empfindlich gegenüber Reib- und/oder Scherkräften, so dass hier die Vorteile der Erfindung besonders gut zum Tragen kommen.

Bevorzugt wird Wasser als Anmachflüssigkeit verwendet. Dieses ist vergleichsweise kostengünstig und auf Baustellen grundsätzlich verfügbar, so dass sich das Verfahren auf einer Baustelle in einfacher Weise durchführen lässt. Alternativ oder ergänzend zum Wasser kann auch eine andere Anmachflüssigkeit zugegeben werden.

In Weiterbildung der Erfindung wird vorgeschlagen, dass dem Trockenbaustoff und/oder der Anmachflüssigkeit vor oder während dem Anmachen wenigstens ein Additiv zugegeben wird. Durch die Zugabe wenigstens eines Additivs können die Verarbeitungseigenschaften der herzustellenden Putz- oder Mörtelmasse optimiert werden. Hier sind insbesondere Tenside als mögliche Additive zu nennen.

Der nach einem erfindungsgemäßen Verfahren maschinell angemachte Trockenbaustoff bildet eine Putz- oder Mörtelmasse aus, die es unmittelbar weiter zu verarbeiten, insbesondere auf eine Bauteiloberfläche aufzutragen gilt. Bevorzugt wird daher der angemachte Trockenbaustoff über das Förderaggregat einer Austragsvorrichtung zugeführt, die zum Austragen der Putz- oder Mörtelmasse an das Förderaggregat angeschlossen wird. Der Anschluss kann beispielsweise über eine Schlauchleitung erfolgen. Am freien Ende der Schlauchleitung kann eine Düse angebracht sein, um das Aus- bzw. Auftragen mittels Spritzen zu ermöglichen. Die hierzu erforderliche Pumpleistung wird vorzugsweise von dem vorgeschalteten Förderaggregat erbracht, wobei es sich insbesondere um eine Schneckenpumpe handeln kann.

Ferner wird eine Putzmasse vorgeschlagen, die Aerogel-Partikel als Leichtfüllstoff enthält. Diese Putzmasse besitzt nach dem Aushärten eine Wärmeleitfähigkeit λ < 0,07 W/(m*K), vorzugsweise λ < 0,05 W/(m*K), weiterhin vorzugsweise λ < 0,03 W/(m*K). Die Putzmasse ist daher insbesondere zur Herstellung eines Dämmputzes geeignet. Die Herstellung einer Putzmasse nach dem erfindungsgemäßen Verfahren gewährleistet, dass die enthaltenen Aerogel-Partikel beim Anmachen nicht zerstört werden, so dass das hierin eingeschlossene Luftvolumen erhalten bleibt. Denn dieses bildet die Grundlage für die hervorragenden Dämmeigenschaften des hieraus hergestellten Dämmputzes.

## Patentansprüche

1. Verfahren zum maschinellen Anmachen schwer benetzbarer Trockenbaustoffe zur Herstellung einer Putz- oder Mörtelmasse, bei dem wenigstens einem Trockenbaustoff wenigstens eine Anmachflüssigkeit zugegeben wird und anschließend der Trockenbaustoff und die Anmachflüssigkeit in einem ersten Mischvorgang gemischt werden, und bei dem die den Trockenbaustoff und die Anmachflüssigkeit enthaltende Mischung wenigstens einem weiteren Mischvorgang unterzogen wird, der unmittelbar auf den ersten Mischvorgang folgt, und anschließend der angemachte Trockenbaustoff einem Förderaggregat, insbesondere einer Schneckenpumpe, zugeführt wird, worin bei dem wenigstens einen weiteren Mischvorgang statische Mischwerkzeuge sowie mit den statischen Mischwerkzeugen zusammenwirkende dynamische Mischwerkzeuge eingesetzt werden, wobei die mit den statischen Mischwerkzeugen zusammenwirkenden dynamischen Mischwerkzeuge an einer Welle angeordnet sind und sich von der Welle nach radial außen erstrecken, während die statischen Mischwerkzeuge sich von einer Innenumfangsfläche eines die Welle umgebenden Mischrohrs nach radial innen erstrecken, **dadurch gekennzeichnet, dass** ein Trockenbaustoff verwendet wird, der Aerogel-Partikel als Leichtfüllstoff enthält.

2. Verfahren nach Anspruch 1,
**dadurch gekennzeichnet, dass** bei dem weiteren Mischvorgang mit den statischen Mischwerkzeugen zusammenwirkende dynamische Mischwerkzeuge eingesetzt werden, die an einer Welle angeordnet sind, die dynamische Mischwerkzeuge zur Durchführung des ersten Mischvorgangs umfasst.

3. Verfahren nach Anspruch 2,
**dadurch gekennzeichnet, dass** die Mischwerkzeuge aufweisende Welle und/oder eine Welle des Förderaggregats elektromotorisch angetrieben wird bzw. werden, wobei vorzugsweise die Wellen wirkverbunden sind und über einen gemeinsamen Elektromotor angetrieben werden.

4. Verfahren nach einem der vorhergehenden Ansprüche,
**dadurch gekennzeichnet, dass** ein Trockenbaustoff verwendet wird, der neben Aerogel-Partikel wenigstens einen weiteren Leichtfüllstoff, vorzugsweise Perlite und/oder Vermiculite, enthält.

5. Verfahren nach einem der vorhergehenden Ansprüche,
**dadurch gekennzeichnet, dass** Wasser als Anmachflüssigkeit verwendet wird.

6. Verfahren nach einem der vorhergehenden Ansprüche,
**dadurch gekennzeichnet, dass** dem Trockenbaustoff und/oder der Anmachflüssigkeit vor oder während dem Anmachen wenigstens ein Additiv zugegeben wird.

7. Verfahren nach einem der vorhergehenden Ansprüche,
**dadurch gekennzeichnet, dass** der angemachte Trockenbaustoff über das Förderaggregat einer Austragsvorrichtung zugeführt wird, die zum Austragen der Putz- oder Mörtelmasse an das Förderaggregat angeschlossen wird.

## Claims

1. A method for mechanically preparing hard-to-wet dry building materials for producing a plaster mass or a mortar mass, in which at least one preparation liquid is added to at least one dry building material and the dry building material and the preparation liquid are then mixed in a first mixing process, and in which the mixture containing the dry building material and the preparation liquid undergoes at least one further mixing process, which immediately follows the first mixing process, and the prepared dry building material is then supplied to a conveyor unit, in particular a worm pump, wherein static mixing tools and dynamic mixing tools cooperating with said static mixing tools are used in the at least one further mixing process, wherein the dynamic mixing tools cooperating with the static mixing tools are arranged on a shaft and extend radially outward from the shaft, whereas the static mixing tools extend radially inward from an inner circumferential surface of a mixing tube enveloping the shaft, **characterized in that** use is made of a dry building material which contains aerogel particles as a light filler.

2. The method according to Claim 1, **characterized in that** dynamic mixing tools cooperating with the static mixing tools are used in the further mixing process, which dynamic mixing tools are arranged on a shaft that comprises dynamic mixing tools for carrying out the first mixing process.

3. The method according to Claim 2, **characterized in that** the shaft having the mixing tools and/or a shaft of the conveyor unit is or are driven by an electric motor, wherein the shafts are preferably operatively connected and driven by a common electric motor.

4. The method according to any one of the preceding claims, **characterized in that** use is made of a dry building material, which along with aerogel particles contains at least one further light filler, preferably perlite and/or vermiculite.

5. The method according to any one of the preceding claims, **characterized in that** water is used as a preparation liquid.

6. The method according to any one of the preceding claims, **characterized in that** at least one additive is added to the dry building material and/or to the preparation liquid before or during the preparation.

7. The method according to any one of the preceding claims, **characterized in that** the prepared dry building material is supplied via the conveyor unit to a discharge device, which is attached to the conveyor unit for discharging the plaster mass or the mortar mass.

## Revendications

1. Procédé de gâchage mécanique de matériaux de construction secs difficilement mouillables pour la fabrication d'une masse d'enduit ou de mortier, dans lequel on ajoute au moins un matériau de construction sec à d'enfer au moins un liquide de gâchage et le matériau de construction sec et le liquide de gâchage sont ensuite mélangés dans une première opération de mélange, et dans lequel le mélange contenant le matériau de construction sec et le type de gâchage sont soumis à une autre opération de mélange qui suit immédiatement la première opération de mélange et le matériau de construction sec gâché est ensuite acheminé à un agrégat de transport, en particulier une pompe à vis,
dans lequel, dans l'au moins une autre opération de mélange, des outils de mélange statiques, de même que des outils de mélange dynamiques coopérant avec les outils de mélange statiques, sont utilisés, les outils de mélange dynamiques coopérant avec les outils de mélange statiques étant disposés au niveau d'un arbre et s'étendant radialement vers l'extérieur depuis l'arbre, tandis que les outils de mélange statiques s'étendent radialement vers l'intérieur depuis une surface circonférentielle intérieure d'un tuyau de mélange entourant l'arbre, **caractérisé en ce qu'**on utilise un matériau de construction sec qui contient des particules d'aérogel en tant que matériau de remplissage léger.

2. Procédé selon la revendication 1,
**caractérisé en ce que**, dans l'autre opération de mélange, on utilise des outils de mélange dynamiques coopérant avec les outils de mélange statiques et qui sont disposés sur un arbre qui comprend les outils de mélange dynamiques pour réaliser la première opération de mélange.

3. Procédé selon la revendication 2,
**caractérisé en ce que** l'arbre présentant les outils de mélange et/ou un arbre de l'agrégat de transport est ou sont entraînés par moteur électrique, les arbres étant de préférence en liaison fonctionnelle et entraînéd par un moteur électrique commun.

4. Procédé selon une des revendications précédentes, **caractérisé en ce qu'**on utilise un matériau de construction sec qui contient, outre des particules d'aérogel, au moins un autre matériau de remplissage léger, de préférence de la perlite et/ou de la vermiculite.

5. Procédé selon une des revendications précédentes, **caractérisé en ce qu'**on utilise de l'eau comme liquide de gâchage.

6. Procédé selon une des revendications précédentes, **caractérisé en ce qu'**au moins un additif est ajouté au matériau de construction sec et/ou au liquide de gâchage avant ou pendant le gâchage.

7. Procédé selon une des revendications précédentes, **caractérisé en ce que** le matériau de construction sec gâché est acheminé par un agrégat de transport vers un dispositif de délivrance qui est raccordé à l'agrégat de transport pour délivrer la masse d'enduit ou de mortier.
